## Europäisches Patentamt
## European Patent Office
## Office européen des brevets

(11) Numéro de publication : **0 130 152**
**B1**

# FASCICULE DE BREVET EUROPÉEN

(45) Date de publication du fascicule du brevet :
30.09.87

(51) Int. Cl.⁴ : **B 62 M   3/08**

(21) Numéro de dépôt : **84810306.5**

(22) Date de dépôt : **22.06.84**

(54) **Pédale de bicyclette.**

(30) Priorité : 23.06.83 FR 8310619

(43) Date de publication de la demande :
02.01.85 Bulletin 85/01

(45) Mention de la délivrance du brevet :
30.09.87 Bulletin 87/40

(84) Etats contractants désignés :
**AT BE CH DE FR GB IT LI LU NL SE**

(56) Documents cités :
EP-A- 0 012 097
EP-A- 0 058 438
EP-A- 0 063 542
US-A- 4 345 487

(73) Titulaire : **Morattel, François**
**Rue du Noux**
**CH-1351 Rances (CH)**

(72) Inventeur : **Morattel, François**
**Rue du Noux**
**CH-1351 Rances (CH)**

(74) Mandataire : **Nithardt, Roland**
**CABINET ROLAND NITHARDT Rue Edouard Verdan**
**15**
**CH-1400 Yverdon (CH)**

## Description

La présente invention concerne une pédale de bicyclette comportant un support d'appui pour le pied, monté de manière pivotante par rapport à un axe perpendiculaire à l'axe de rotation de cette pédale.

Les pédales de bicyclette traditionnelles comportent habituellement un axe fixé perpendiculairement à la bielle du pédalier et un support pour le pied monté sur cet axe et pouvant tourner librement par rapport à lui. Au cours de l'utilisation de ces bicyclettes équipées de telles pédales, l'articulation du genou de l'utilisateur effectue un mouvement de rotation interne et externe contemporain de la flexion et de l'extension, qui est conditionné par la configuration de l'articulation. L'inégalité du développement des condyles fémoraux, la forme des surfaces articulaires tibiales et l'orientation des ligaments latéraux conditionnent une rotation de 20 degrés lors de la flexion du genou et l'inverse lors de son extension. Lorsque le pied est en appui, il doit s'adapter à cette rotation du genou et pour cela, il est contraint successivement en inversion/éversion par la musculature de la jambe constituée par le jambier postérieur et les péroniers latéraux. Ce travail musculaire n'existe que par la compensation de la rotation du genou et il n'est pas utile à l'avance du cycliste. D'autre part, dans cette situation, la rotation du genou n'est jamais parfaitement compensée par l'action du pied, et cela empêche une utilisation optimale de la puissance de la musculature du quadriceps, puisque celui-ci ne travaille jamais dans un axe correspondant exactement à la position du genou. Ceci présente un inconvénient qui est particulièrement important pour les sportifs de compétition chez qui il est essentiel de rechercher une optimalisation des effets pour une dépense énergétique donnée.

La publication EP-A-0 058 438 décrit une pédale pourvue d'un support d'appui dont la position par rapport à l'axe de rotation de la pédale peut être réglée selon plusieurs paramètres géométriques pour être adaptée à la morphologie de l'utilisateur. En particulier, ce support peut être réglé par pivotement autour d'un axe perpendiculaire à l'axe de rotation de la pédale. Ces réglages étant faits, le support est bloqué en position au moyen de cales pour permettre à l'usager de pédaler. Le pied ne peut alors pivoter autour dudit axe perpendiculaire qu'en exerçant une poussée transversale sur l'une ou l'autre de deux griffes latérales montées élastiquement par rapport au support d'appui. Il faut remarquer qu'un tel pivotement exige de l'usager un effort musculaire non négligeable. D'ailleurs, cette possibilité de mouvement n'est pas prévue pour faciliter le travail des muscles et des articulations, mais essentiellement pour permettre à l'utilisateur de dégager aisément sa chaussure de la pédale, notamment en cas de chute. En utilisation normale, ce dispositif ne permet qu'un pivotement très limité et s'exerçant toujours à l'encontre de la force d'un ressort.

La présente invention se propose de trouver une solution au problème décrit plus haut en réalisant une pédale de bicyclette du type indiqué en préambule, caractérisée en ce que le support d'appui comporte une plaque supérieure pivotante agencée pour pouvoir pivoter librement autour dudit axe perpendiculaire pendant que l'utilisateur pédale. De ce fait, le pied peut pivoter d'un certain angle par rapport à l'axe de la pédale de telle manière que la musculature de la jambe puisse travailler à tout moment dans une position qui correspond exactement à la position du genou.

La présente invention sera mieux comprise en référence à la description d'un exemple de réalisation et du dessin annexe dans lequel :

La figure 1 représente une vue de dessus de la pédale selon l'invention,

La figure 2 représente une vue de face, partiellement coupée de la pédale illustrée par la fig. 1,

La figure 3 représente une vue de dessus de la première plaque du support d'appui pour le pied de la pédale selon les figures 1 et 2,

La figure 4 représente une vue de côté de la première plaque illustrée par la fig. 3,

La figure 5 représente une vue arrière de la première plaque illustrée par la fig. 3,

La figure 6 représente une vue de dessus de la seconde plaque du support d'appui pour le pied de la pédale illustrée par les figures 1 et 2,

La figure 7 représente une vue de côté de la seconde plaque représentée par la fig. 6,

La figure 8 représente une vue arrière de la seconde plaque représentée par la fig. 6,

La figure 9 représente une vue en perspective d'une autre forme de réalisation d'une pédale de bicyclette selon l'invention,

La figure 10 représente une vue partielle en coupe de la pédale de bicyclette de la fig. 9,

La figure 11 représente une vue en coupe axiale d'une autre forme de réalisation d'une pédale de bicyclette selon l'invention,

La figure 12 représente une vue de dessus de la pédale selon la fig. 11,

La figure 13 représente une vue en coupe transversale de la pédale de la fig. 11, et

La figure 14 représente une vue de détail d'une variante de la pédale selon la fig. 11.

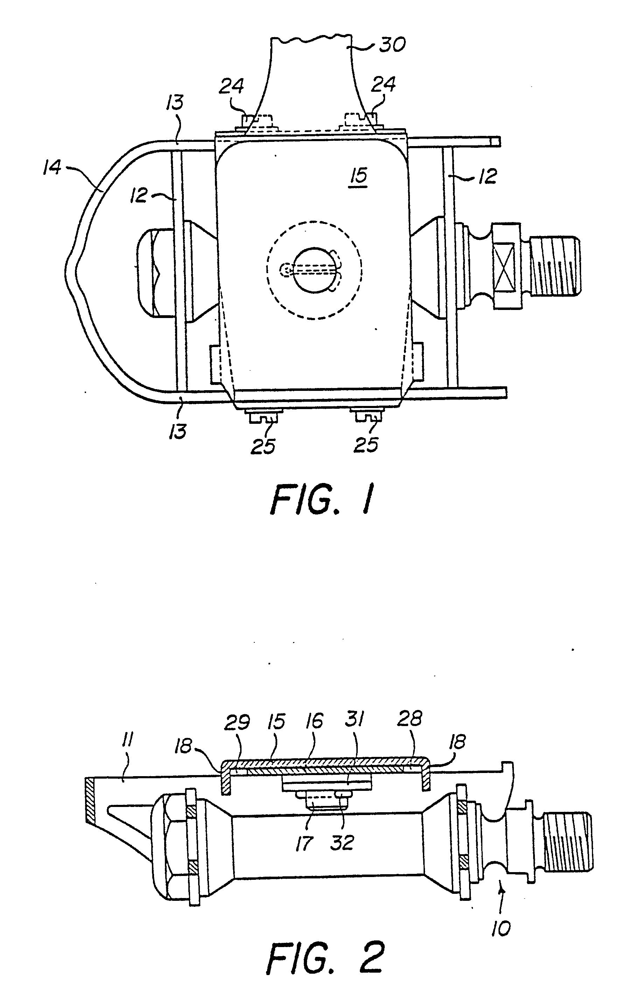

En référence aux figures 1 à 8, la pédale décrite comporte d'une manière connue en soi un axe 10 destiné à être fixé perpendiculairement à un pédalier (non representé) et portant un support 11 pour le pied. Ce support 11 est habituellement constitué par deux traverses 12 et deux bords longitudinaux 13 reliés parallèlement entre eux et fixés aux extrémités respectives des traverses 12. Dans l'exemple illustré par la fig. 1, les deux bords longitudinaux 13 sont réalisés d'une pièce et reliés par un arceau 14.

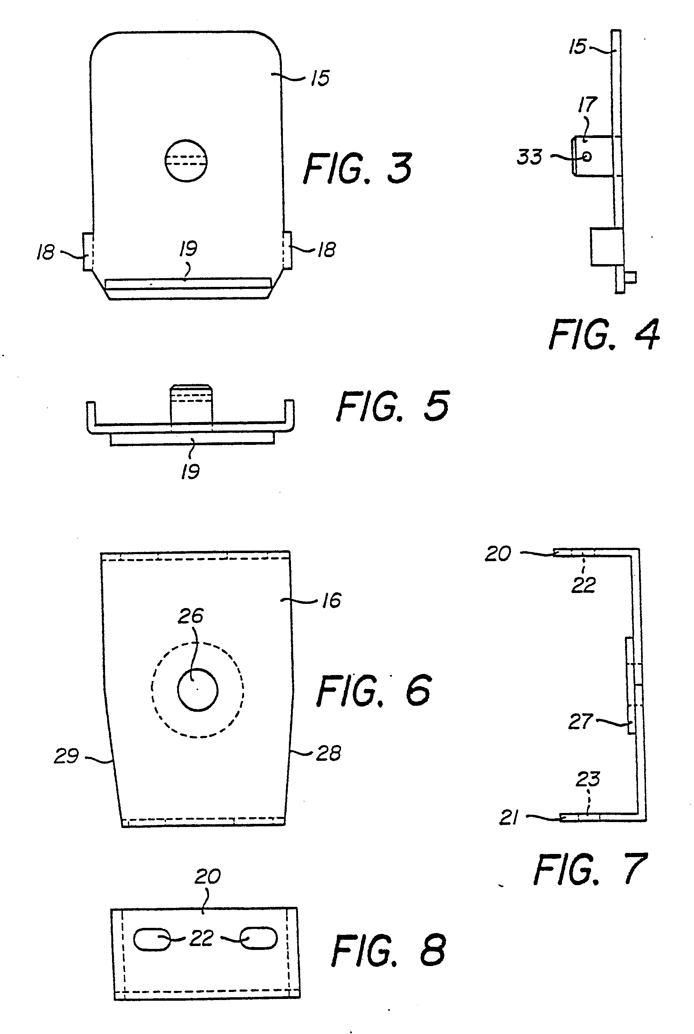

Sur ce support traditionnel 11 est monté un support d'appui 15 pour le pied, composé par une première plaque 15 et d'une seconde plaque illustrées plus en détail respectivement par les figures 3 à 5 et les figures 6 à 8. La plaque supérieure 15 a, dans le présent cas, une forme rectangulaire aux bords antérieurs arrondis, dont la longueur est sensiblement égale à la distance qui sépare les bords longitudinaux 13 du support 11. A sa surface inférieure, la plaque sensiblement plane 15 porte un pivot cylindrique 17, soudé perpendiculairement au plan de la plaque 15, approximativement au milieu de cette plaque. Deux pattes 18 disposées symétriquement à proximité de l'extrémité arrière de la plaque 15, et repliées perpendiculairement vers le bas, constituent des butées de limitation de l'amplitude du mouvement de rotation de la plaque 15 autour du pivot 17. Une barrette transversale 19 est fixée à l'arrière de la plaque 15 pour coopérer avec une rainure de retenue habituellement ménagée dans les chaussures des cyclistes sportifs.

La seconde plaque 16 sert à fixer la première plaque 15 sur le support 11. Elle a une forme générale de U dont la partie centrale constitue la plaque 16 proprement dite prolongée à ses extrémités par deux rebords 20 et 21 pourvus d'ouvertures 22 et 23 qui permettent de la visser, au moyen des vis 24 et 25 (illustrées par la fig. 1), contre les bords longitudinaux du support 11 de la pédale. La plaque 16 comporte une ouverture centrale 26 dont le diamètre est sensiblement égal au diamètre du pivot cylindrique 17. Une rondelle d'appui 27 est soudée à la surface inférieure de la plaque 16, coaxialement à l'ouverture 26. Les bords latéraux 28 et 29 de la plaque 16 sont découpés en biais de façon à permettre la rotation de la première plaque 15 par rapport à la seconde plaque 16, l'amplitude du mouvement étant limité par la présence des butées constituées par les pattes 18.

La mise en place de ce support d'appui constitué essentiellement par la première plaque 15 et la seconde plaque 16 s'effectue de la manière suivante : on fixe tout d'abord la seconde plaque 16 au moyen des vis 24 et 25 contre les rebords longitudinaux 13 du support 11 de la pédale. Les vis 24 peuvent également servir à fixer un cale-pied 30 (partiellement représenté sur la fig. 1). On met ensuite en place la première plaque 15 en engageant le pivot 17 dans l'ouverture centrale 26 de la seconde plaque 16. On engage une rondelle libre 31 (voir sur la fig. 1) sur l'extrémité protubérante du pivot 17 en appui contre la rondelle 27 solidaire de la surface inférieure de la plaque 16. On introduit finalement une goupille fendue 32 dans un alésage approprié 33 (voir fig. 4) ménagé à proximité de l'extrémité inférieure du pivot 17.

Il est bien entendu que la forme et les dimensions des plaques 15 et 16 pourraient être modifiées de même que l'angle du biais des bords latéraux 28 et 29 de la seconde plaque 16.

Par ailleurs, bien d'autres formes de réalisation peuvent être imaginées. Dans la pratique, les différentes variantes peuvent être groupées en deux catégories principales : d'une part les pédales traditionnelles transformées par l'adjonction d'un accessoire dont la pièce essentielle est la plaque pivotante, et d'autre part les pédales entièrement conçues selon ce principe nouveau destiné à permettre le pivotement du pied tel que décrit précédemment.

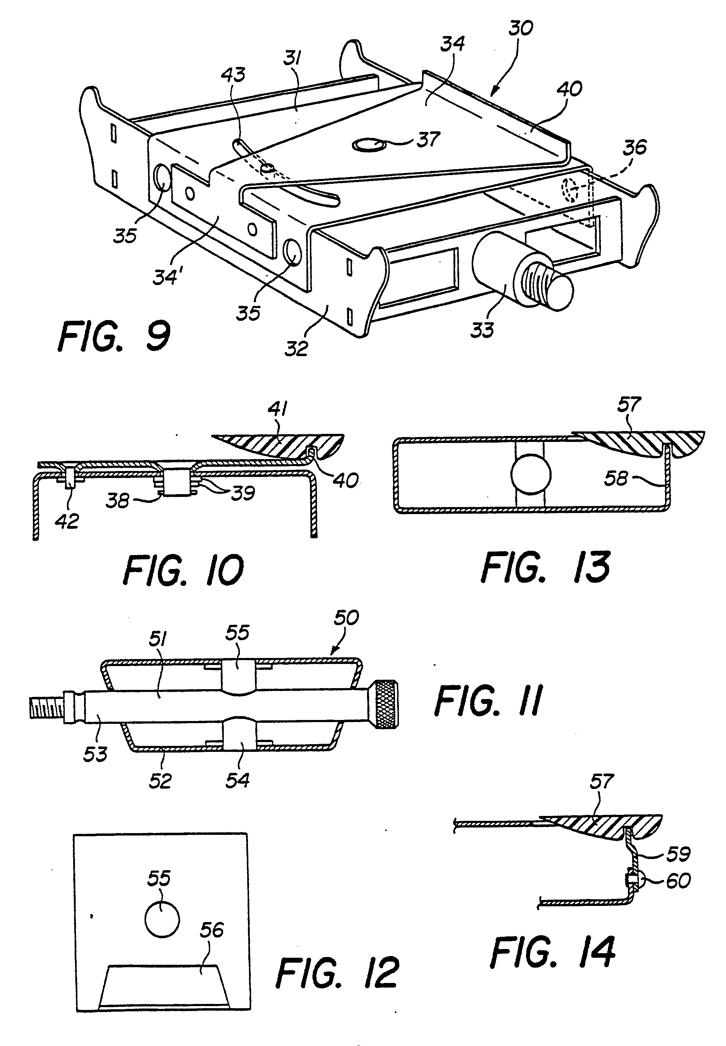

La pédale décrite ci-dessus fait partie de la première catégorie. Une variante de ce type de pédale est illustrée par les figures 9 et 10. L'accessoire 30 se compose essentiellement d'une plaque de base 31 en forme de U, vissée sur la cage 32 de la pédale, transversalement par rapport à l'axe 33, et d'une plaquette mobile 34. La plaque de base 31 est de préférence vissée à l'avant à l'aide de deux vis 35 et à l'arrière à l'aide de deux autres vis 36. La plaquette mobile 34 est montée sur la plaque de base 31 par un axe 37 retenu en position par un clip de retenue 38 et des rondelles 39. L'arrière de la plaquette mobile 34 est recourbé vers le haut de manière à définir une barrette 40 destinée à s'engager dans la rainure ménagée dans une plaquette 41 couramment fixée sous la semelle d'une chaussure de cycliste, pour assurer une meilleure liaison entre la chaussure et la pédale. L'avant de la plaquette mobile se prolonge par une languette 34′ permettant de fixer le cale-pied (non représenté).

L'avant de la plaquette est équipé d'un ergot 42 qui se prolonge vers le bas à travers une entaille 43 en forme d'arc de cercle ménagée dans la plaquette de base 31. Cette entaille coopère avec l'ergot 42 pour limiter le pivotement de la plaquette mobile 34. Elle peut être réalisée de telle manière que le pivotement de la plaquette mobile 34 soit davantage limité vers l'intérieur que vers l'extérieur. Par exemple, le débattement angulaire vers l'intérieur peut être limité à 5 degrés et celui vers l'extérieur à 15 degrés.

L'autre catégorie de pédale articulée est illustrée par les figures 11 à 14. La pédale de bicyclette articulée 50, de conception nouvelle illustrée par la fig. 11, se compose essentiellement d'un croisillon 51 et d'une cage 52 adaptée sur ce croisillon. Le croisillon 51 se compose en fait d'un axe 53 destiné à être vissé à l'extrémité du pédalier et de deux pivots verticaux 54 et 55, fixés perpendiculairement à l'axe 53 autour desquels peut pivoter horizontalement la cage 52. Cette cage comporte des organes de limitation de l'amplitude du pivotement autour des tronçons d'axes 54 et 55, constitués par exemple par des entailles ou des butées prévues sur les côtés latéraux de cette cage.

La fig. 12 représente la cage vue de dessus. Un évidement 56 est ménagé le long du bord longitudinal arrière de la cage de la pédale pour permettre, comme représenté dans la fig. 13, à une plaquette 57, habituellement fixée sous la semelle de la chaussure du cycliste, d'être pratiquement noyée dans l'épaisseur de la pédale pour éviter une surépaisseur préjudiciable à la stabilité du pied.

Etant donné que la face arrière 58 de la cage s'use relativement rapidement à cause de la friction de la plaquette 57, il est possible de prévoir une paroi de cage 59 amovible, par exemple fixée par des vis 60 sur un rebord coudé de cette cage, et qui se remplace aisément sans que l'utilisateur soit obligé de remplacer toute la cage.

Le croisillon 51 peut être réalisé en une pièce moulée ou usinée. La cage adaptée sur ce croisillon est de préférence constituée par un profilé découpé à la longueur voulue.

## Revendications

1. Pédale de bicyclette comportant un support d'appui pour le pied, monté de manière pivotante par rapport à un axe perpendiculaire à l'axe de rotation (10) de la pédale, caractérisée en ce que le support d'appui comporte une plaque supérieure pivotante (15, 34) agencée pour pouvoir pivoter librement autour dudit axe perpendiculaire pendant que l'utilisateur pédale.

2. Pédale selon la revendication 1, caractérisée en ce que le support d'appui comporte une première plaque (15) sensiblement plane, solidaire d'un pivot (17) cylindrique fixé perpendiculairement sur sa surface inférieure, sensiblement en son milieu, ce pivot étant agencé pour être logé dans une ouverture (26) ménagée dans une pièce solidaire de la pédale.

3. Pédale selon la revendication 2, caractérisée en ce que la pièce solidaire de la pédale comporte une seconde plaque (16), sensiblement plane, rigidement fixée à la pédale, et en ce que la surface supérieure de la première plaque (15) peut pivoter sur son pivot (17), en s'appuyant contre la surface supérieure de la seconde plaque (16).

4. Pédale selon la revendication 2 ou 3, caractérisée en ce que la première plaque (15) comporte des butées (18) pour limiter l'amplitude de son mouvement de rotation sur son pivot (17).

5. Pédale selon la revendication 3, caractérisée en ce que la seconde plaque (16) comporte deux rebords (20) et (21), agencés pour permettre sa fixation contre les bords longitudinaux (13) de la pédale.

6. Pédale selon la revendication 4, caractérisée en ce que les butées (18) sont disposées symétriquement de part et d'autre de la première plaque (15), à proximité de l'une de ses extrémités, et sont constituées par des pattes repliées sensiblement à angle droit par rapport au plan de la plaque.

7. Pédale selon la revendication 2, caractérisée en ce que la première plaque (15) comporte une barrette transversale (19) dressée sensiblement perpendiculairement à son plan et ménagée le long de son bord arrière pour s'engager dans une rainure d'une plaquette fixée sous la semelle d'une chaussure.

8. Pédale selon la revendication 3, caractérisée en ce que le pivot comporte un alésage (33) destiné à loger une goupille (32) agencée pour retenir la première plaque (15) en contact avec la seconde plaque (16).

9. Pédale selon la revendication 1, caractérisée en ce que le support d'appui pour le pied est constitué par une plaquette mobile (34) montée sur un pivot solidaire d'une plaque de base (31) constituée par un profil en U vissé sur la cage de la pédale, et en ce que la plaquette mobile comporte un ergot engagé dans une entaille (43) ménagée dans la plaque de base pour limiter le pivotement de cette plaquette.

10. Pédale selon la revendication 9, caractérisée en ce que l'entaille (43) est conçue de telle manière que le pivotement soit plus limité vers l'intérieur que vers l'extérieur.

11. Pédale selon la revendication 9, caractérisée en ce que la plaquette mobile (34) se prolonge vers l'avant et comporte une languette (34') de fixation d'un cale-pied.

12. Pédale selon la revendication 9, caractérisée en ce que la plaquette mobile (34) comporte une barrette recourbée (40) prévue pour s'engager dans une rainure d'une plaquette fixée sous la semelle d'une chaussure.

13. Pédale selon la revendication 1, caractérisée en ce qu'elle comporte un croisillon (51) comportant un axe horizontal (53) et deux tronçons d'axes verticaux (54) et (55) et une cage (52) montée sur les deux tronçons d'axes verticaux (54) et (55) de telle manière qu'elle puisse pivoter sur eux.

14. Pédale selon la revendication 13, caractérisée en ce que la cage (52) comporte un évidement (56) permettant de noyer dans l'épaisseur de cette cage une plaquette (57) rainurée fixée sur la semelle d'une chaussure.

15. Pédale selon la revendication 14, caractérisée en ce que la cage (52) comporte une paroi amovible (59).

## Claims

1. Bicycle pedal including a foot rest, mounted so as to swivel with respect to an axis perpendicular to the axis of rotation (10) of the pedal, characterized in that the foot rest includes an upper swivelling plate (15, 34) adapted to be able to swivel freely round said perpendicular axis while the user is pedalling.

2. Pedal according to claim 1, characterized in that the foot rest includes a first substantially plane plate (15) solid with a cylindrical pivot (17) fixed on its lower surface, subtantially in its middle, this pivot being adapted to be accomodated in an opening (26) provided in a piece sold with the pedal.

3. Pedal according to claim 2, characterized in that the piece solid with the pedal includes a second substantially plane plate (16) rigidly fixed to the pedal, and in that the upper surface of the first plate (15) can swivel on its pivot (17), while bearing on the upper surface of the second plate (16).

4. Pedal according to claim 2 or 3, characterized in that the first plate (15) includes stops (18) for limiting the amplitude of its rotating movement on its pivot (17).

5. Pedal according to claim 3, characterized in that the second plate (16) includes two rims (20) and (21), adapted to permit its fixation against the longitudinal edges (13) of the pedal.

6. Pedal according to claim 4, characterized in that the stops (18) are disposed symmetrically on both sides of the first plate (15), close to one of its extremities, and consist of lugs bent substantially at right angles with respect to the plane of the plate.

7. Pedal according to claim 2, characterized in that the first plate (15) includes a transverse cleat (19) raised substantially perpendicularly to its plane and provided along its rear edge for engagement in a groove of an insert fixed under the sole of a shoe.

8. Pedal according to claim 3, characterized in that the pivot includes a bore (33) for accomodating a pin (32) adapted to keep the first plate (15) in contact with the second plate (16).

9. Pedal according to claim 1, characterized in that the foot rest consists of a small mobile plate (34) mounted on a pivot solid with a base plate (31) consisting of a U-shaped section screwed onto the pedal frame, and in that the mobile plate includes a pin engaged in a notch (43) provided in the base plate to limit the swivelling of this plate.

10. Pedal according to claim 9, characterized in that the notch (43) is designed so that the swivelling is more limited towards the interior than towards the exterior.

11. Pedal according to claim 9, characterized in that the mobile plate (34) is extended forwardly and includes a tongue (34') for fixing a foot block.

12. Pedal according to claim 9, characterized in that the mobile plate (34) comprises a curved cleat (40) provided for engagement in a groove of an insert fixed under the sole of a shoe.

13. Pedal according to claim 1, characterized in that it includes a cross-piece (51) including a horizontal pin (53) and two vertical pin sections (54) and (55) and a frame (52) mounted on the two vertical pin sections (54) and (55) in such manner that it may swivel thereon.

14. Pedal according to claim 13, characterized in that the frame (52) includes a recess (56) enabling to countersink in the thickness of this frame a small grooved insert (57) fixed onto the sole of a shoe.

15. Pedal according to claim 14, characterized in that the frame (52) includes a removable wall (59).

**Patentansprüche**

1. Fahrradpedal, welches eine Abstützung für den Fuß aufweist, die im Bezug auf eine senkrecht zur Drehachse (10) des Pedals liegende Achse schwenkbar montiert ist, dadurch gekennzeichnet, daß die Abstützung eine obere schwenkbare Platte (15, 34) aufweist, die so gestaltet ist, daß sie frei um die genannte senkrecht liegende Achse schwenken kann, während der Benutzer mit dem Rad fährt.

2. Pedal nach Anspruch 1, dadurch gekennzeichnet, daß die Abstützung eine erste, im wesentlichen ebene Platte (15) aufweist, die fest mit einem auf ihrer Unterseite und etwa in ihrem Mittelpunkt senkrecht angebrachten zylindrischen Drehzapfen (17) verbunden ist, wobei dieser Drehzapfen so gestaltet ist, daß man ihn in eine Öffnung (26) einsetzen kann, die in einem mit dem Pedal fest verbundenen Teil ausgespart ist.

3. Pedal nach Anspruch 2, dadurch gekennzeichnet, daß das mit dem Pedal fest verbundene Teil eine zweite im wesentlichen ebene Platte (16) aufweist, die starr am Pedal befestigt ist und daß die obere Fläche der ersten Platte (15) auf ihren Drehzapfen (17) schwenken kann, wobei sie sich auf der oberen Fläche der zweiten Platte (16) abstützt.

4. Pedal nach Anspruch 2 oder 3, dadurch gekennzeichnet, daß die erste Platte (15) Anschläge (18) aufweist, um die Ausschlagweite ihrer Schwenkbewegung auf ihrem Drehzapfen (17) zu begrenzen.

5. Pedal nach Anspruch 3, dadurch gekennzeichnet, daß die zweite Platte (16) zwei Randleisten (20) und (21) aufweist, die angeordnet sind, um ihre Befestigung an den Längsrändern (13) des Pedals zu erlauben.

6. Pedal nach Anspruch 4, dadurch gekennzeichnet, daß die Anschläge (18) symmetrisch beiderseits der ersten Platte (15) in der Nähe von einem ihrer Enden angeordnet und als etwa rechtwinklig zur Plattenebene umgebogene Laschen ausgebildet sind.

7. Pedal nach Anspruch 2, dadurch gekennzeichnet, daß die erste Platte (15) einen Quersteg (19) aufweist, der etwa senkrecht auf ihrer Ebene montiert und entlang ihres hinteren Randes angebracht ist, um in eine Rille in einer unter der Sohle eines Schuhes befestigten Platte einzugreifen.

8. Pedal nach Anspruch 3, dadurch gekennzeichnet, daß der Drehzapfen eine Bohrung (33) aufweist, um einen Splint (32) unterzubringen, der dazu dient die erste Platte (15) in Verbindung mit der zweiten Platte (16) zu halten.

9. Pedal nach Anspruch 1, dadurch gekennzeichnet, daß die Abstützung für den Fuß aus einer beweglichen Platte (34) besteht, die auf einen fest mit einer Grundplatte (31) verbundenen Drehzapfen montiert ist, wobei Letztere ein U-Profil darstellt, welches auf den Pedalrahmen geschraubt ist, und daß die bewegliche Platte einen Stift aufweist, der in einen in der Grundplatte vorgesehenen Schlitz (43) eingreift, um das Schwenken dieser Platte zu begrenzen.

10. Pedal nach Anspruch 9, dadurch gekennzeichnet, daß der Schlitz (43) so ausgebildet ist, daß er das Schwenken nach innen mehr begrenzt als nach außen.

11. Pedal nach Anspruch 9, dadurch gekennzeichnet, daß sich die bewegliche Platte (34) nach vorne verlängert und eine Zunge (34') für die Befestigung eines Fußbügels aufweist.

12. Pedal nach Anspruch 9, dadurch gekennzeichnet, daß die bewegliche Platte (34) einen aufgebogenen Steg (40) aufweist, der vorgesehen ist, um in eine Rille einer unter der Sohle eines Schuhes befestigten Platte einzugreifen.

13. Pedal nach Anspruch 1, dadurch gekennzeichnet, daß es ein Kreuzstück (51) aufweist, bestehend aus einer horizontalen Achse (53) und zwei vertikalen Achsstücken (54) und (55), desweiteren einen Rahmen (52), der auf den zwei vertikalen Achsstücken (54) und (55) so montiert ist, daß er sich auf ihnen drehen kann.

14. Pedal nach Anspruch 13, dadurch gekennzeichnet, daß der Rahmen (52) eine Aussparung (56) aufweist, die es erlaubt in der Dicke dieses Rahmens eine gerillte an der Sohle eines Schuhes befestigte Platte (57) unterzubringen.

15. Pedal nach Anspruch 14, dadurch gekennzeichnet, daß der Rahmen (52) eine abnehmbare Wand (59) aufweist.

FIG. 1

FIG. 2

FIG. 3

FIG. 4

FIG. 5

FIG. 6

FIG. 7

FIG. 8

**FIG. 9**

**FIG. 10**

**FIG. 13**

**FIG. 11**

**FIG. 12**

**FIG. 14**